Europäisches Patentamt

European Patent Office

Office européen des brevets

(19)

(11) Veröffentlichungsnummer: **0 277 607**

**A1**

## (12) EUROPÄISCHE PATENTANMELDUNG

(21) Anmeldenummer: 88101330.4

(22) Anmeldetag: 29.01.88

(51) Int. Cl.⁴: **F03D 3/06**

(30) Priorität: 05.02.87 DE 3703473

(43) Veröffentlichungstag der Anmeldung:
**10.08.88 Patentblatt 88/32**

(84) Benannte Vertragsstaaten:
**ES GB GR IT NL**

(71) Anmelder: **ALPHA REAL AG**
**Feldeggstrasse 89**
**CH-8008 Zürich(CH)**

(72) Erfinder: **Real, Markus**
**Augustinergasse 4**
**CH-8001 Zürich(CH)**

(74) Vertreter: **EGLI-EUROPEAN PATENT**
**ATTORNEYS**
**Horneggstrasse 4**
**CH-8008 Zürich(CH)**

(54) **Rotor für eine Vertikalwellen-Windturbine.**

(57) Bei Windturbinen mit vertikaler Zentralwelle und in Radialebenen zur Welle vorzugsweise bogenartig verlaufenden Rotorblättern mit dünnwandigen Tragflügel-Hohlprofil besteht das Problem, lokale Spannungsüberhöhungen im Material zu vermeiden, insbesondere im Bereich der Rotorblatt-Endanschlüsse.

Zur Lösung wird vorgeschlagen, dass mindestens einer der Endanschlüsse (EA) wenigstens ein starkwandiges, sich in Längsrichtung des Rotorblattes (RB) erstreckendes, einerseits dem Anschlusselement (AZ) der Zentralwelle (ZW) und andererseits dem benachbarten Endabschnitt des Rotorblattes zugeordnetes Verbindungsglied (VG1a, VG1b; VG2a, VG2b) erhält, das einen sich längs des Anschlusselementes (AZ) der Zentralwelle erstreckenden ersten Anschlussabschnitt (A1a, A2a) und einen sich längs der Aussenwandung (AW) des Rotorblatt-Endabschnitts (RE) erstreckenden zweiten Anschlussabschnitt (A1b, A2b) umfasst, der wenigsten auf einem Teil seiner Erstreckung in Blattlängsrichtung eine bezüglich des ersten Anschlussabschnitts geringere Steifheit gegen übertragene Zug-bzw. Druckkräfte aufweist.

Fig. 2

## Rotor für eine Vertikalwellen-Windturbine

Die Erfindung betrifft einen Rotor für eine Windturbine, der eine vertikale Zentralwelle und eine Mehrzahl von sich im wesentlichen in Radialebenen zB. bogenartig vom oberen zum unteren Endbereich der Zentralwelle erstreckenden Rotorblättern aufweist, die durch Endanschlüsse mit je einem starkwandigen Anschlusselement der Zentralwelle verbunden sind, wobei die Rotorblätter als Hohlprofilkörper mit einer Aussenwandung vergleichsweise geringer Wandstärke und mit einem tragflügelartigen Profilquerschnitt ausgebildet sind.

Windturbinen dieser Bauart sind unter der Bezeichnung Darrieus-Turbinen bekannt (s. z.B. Journal Aircraft, Vol.13, No.12, 1976, S.1023 - 1024). Sie haben den Vorteil einer vergleichsweise einfachen Grundkonstruktion und eignen sich besonders für mittlere und grössere Einheitsleistungen. Die Grundkonstruktion begünstigt auch eine ästhetisch befriedigende Gestaltung, die wegen der grossen Bauhöhe und der anzustrebenden Anordnung jeweils einer grösseren Anzahl von Einheiten in sogenannten "Windfarmen" im Hinblick auf zu vermeidende Störungen des Landschaftsbildes von grosser Bedeutung ist.

Diesen Systemvorteilen stehen gewisse Festigkeits-und Stabilitätsprobleme im Bereich der Befestigung zwischen den tragflügelartigen Hohlprofilabschnitten, aus denen die Rotorblätter wegen ihrer grossen Längenabmessungen im allgemeinen zusammengesetzt werden müssen, sowie zwischen den Rotorblättern und der Zentralwelle gegenüber. Diese Probleme sind unmittelbar bedingt durch das im allgemeinen sehr grosse Verhältniss der Längenabmessungen zu den Querschnittsabmessungen der hauptsächlichen Bauteile sowie mittelbar durch die entsprechende Neigung zu Schwingungen mit niedrigen, im Bereich der Rotordrehzahlen liegenden Eigenfrequenzen und durch die damit verbundene dynamische Materialbeanspruchung.

Im Hinblick auf diese Probleme kommt der Vermeidung von konstruktionsbedingten, lokalen Spannungsüberhöhungen und der Annäherung an eine gleichmässig verteilte Materialbeanspruchung besondere Bedeutung zu. Aufgabe der Erfindung ist daher die Schaffung eines Windturbinenrotors der eingangs genannten Art, der sich durch vergleichsweise geringe Ungleichförmigkeit der räumlichen Spannungsverteilung innerhalb der Verbindungs-und Anschlusskonstruktionen zwischen Rotorblättern und Zentralwelle sowie zwischen den Rotorabschnitten untereinander auszeichnet. Die erfindungsgemässe Lösung dieser Aufgabe ist bestimmt hinsichtlich des Rotorblatt-Zentralwellenanschlusses durch die Merkmale des Anspruchs 1, hinsichtlich der Anschlüsse der Rotorblattabschnitte untereinander durch die Merkmale des Anspruchs 7. Diese Lösungen beruhen auf dem gemeinsamen Prinzip, die Einleitung der Zug-und Druckspannungen von starkwandigen und formsteifen Verbindungsgliedern in die dünnwandigen Hohlkörper des Rotorblattes über Anschlussabschnitte vorzunehmen, welche die dünnwandigen Tragelemente vom Rand oder von einer Endkante her übergreifen und mit diesen in - schubspannungsübertragender Verbindung stehen und deren Verformungssteifheit gegen die zu übertragenden Kräfte zum Inneren der dünnwandigen Elemente hin abnimmt. Dies begünstigt einen Abbau von Spannungskonzentration in den vom Rand vergleichsweise weit entfernten Bereichen der Hohlkörper-Aussenwand. Die Neigung zur Bildung solcher Spannungskonzentrationen im Bereich der Schubspannungsübertragung zwischen stark-und dünnwandigen Tragelementen ist durch die zum Rand hin zunehmend wirksam werdende Dehnung der letzteren und die entsprechende Entlastung der randnahen Wandbereiche bedingt. Eine in entgegengesetzter Richtung zunehmende Dehnung des starkwandigen Verbindungsgliedes wirkt in Richtung einer Entlastung der randfernen Hohlkörper-Wandbereiche und damit einer Vergleichmässigung der Spannungsverteilung.

Weiterbildungen der Erfindung, wie sie in den Unteransprüchen gekennzeichnet sind, werden weiter anhand der in den Zeich nungen schematisch dargestellten Ausführungsbeispiele erläutert. Hierin zeigt:

Fig.1 eine Seitenansicht einer Vertikalwellen-Windturbine mit diametralen Rotorblättern,

Fig.2 eine in grösserem Massstab gehaltene Teil-Seitenansicht des unteren Rotorblatt-Endanschlusses eines erfindungsgemässen Windturbinenrotors,

Fig.3a bis Fig.3c eine in kleinerem Massstab gehaltene und stark vereinfachte Übersichtsdarstellung der Teile des Endanschlusses gemäss Fig.2, und zwar umfassend Fig.3a als Querschnitt des Rotorblatt-Endabschnitts gemäss Schnittebene IIIa-IIIa in Fig.2 sowie Fig.3b und Fig.3c als ebenfalls stark vereinfachte Seitenansichten je eines Paares von vorderen bzw. rückwärtigen Verbindungsgliedern des Rotorblatt-Endanschlusses,

Fig.4 eine in grösserem Massstab gehaltene und ausführlichere Querschnittsdarstellung des Endanschlusses gemäss Fig.3a,

Fig.5 eine Vertikalansicht des Endanschlusses gemäss Blickrichtung V in Fig.2,

Fig.6 einen Querschnitt eines Rotorblattes im Bereich einer Verbindung zwischen zusammenstossenden Blattabschnitten,

Fig.7 einen Längsschnitt der Stossverbindung gemäss Schnittebene VII-VII in Fig.6,

Fig.8 in Vorderansicht einen abgewandelten Rotorblatt-Endanschluss mit Achsgelenk und

Fig.9 eine entsprechende Ansicht eines Endanschlusses mit Biegegelenk.

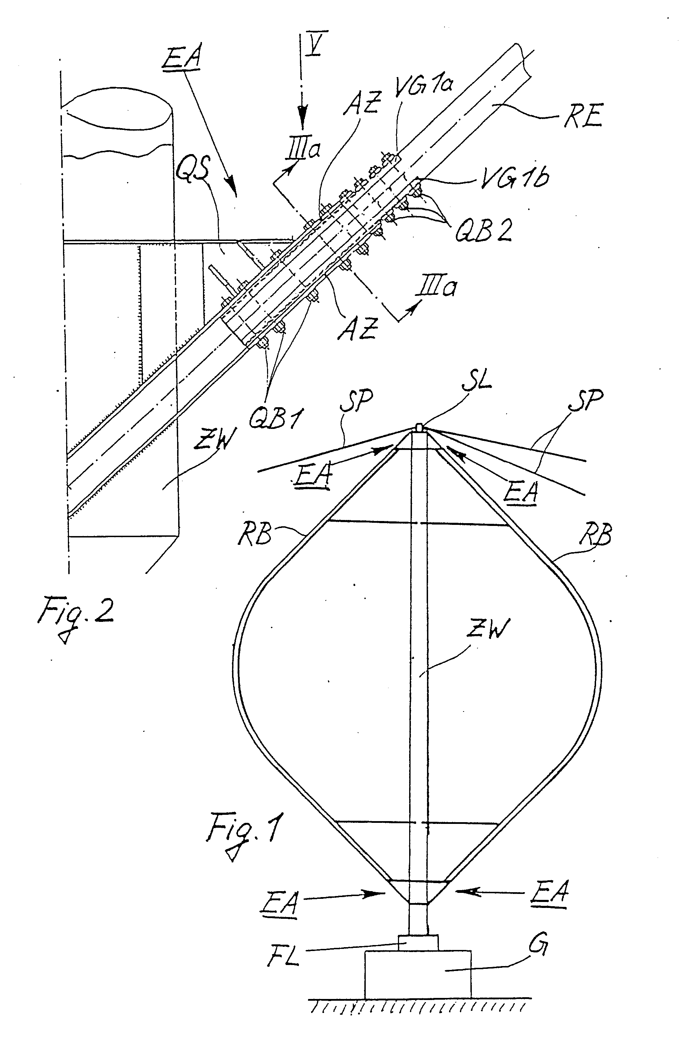

Die Windturbine gemäss Fig.1 umfasst einen Rotor RO, der eine Zentralwelle ZW mit zwei diametral angeordneten Rotorblättern RB aufweist. Letztere sind bogenartig und in Radialebenen zur Zentralwelle verlaufend ausgebildet sowie durch biegesteife Anschlüsse EA am oberen und unteren Ende derselben befestigt. An einem Spitzenlager SL der Zentralwelle angreifende Abspannseile SP mit nicht dargestellten Bodenankern halten den Rotor in seiner Vertikalstellung. Die Rotorblätter sind als dünnwandige, tragfügelartige Hohlprofilkörper ausgebildet und erzeugen an der Zentralwelle ein Drehmoment, das durch den relativ zum bewegten Blattquerschnitt wirksamen, sogenannten "-scheinbaren" Wind bestimmt ist. Eine energieabnehmende Einrichtung, z.B. ein Generator-Aggregat G ist mit dem in einem Fusslager FL radial geführten sowie axial abgestützten unteren ende der Zentralwelle angekuppelt.

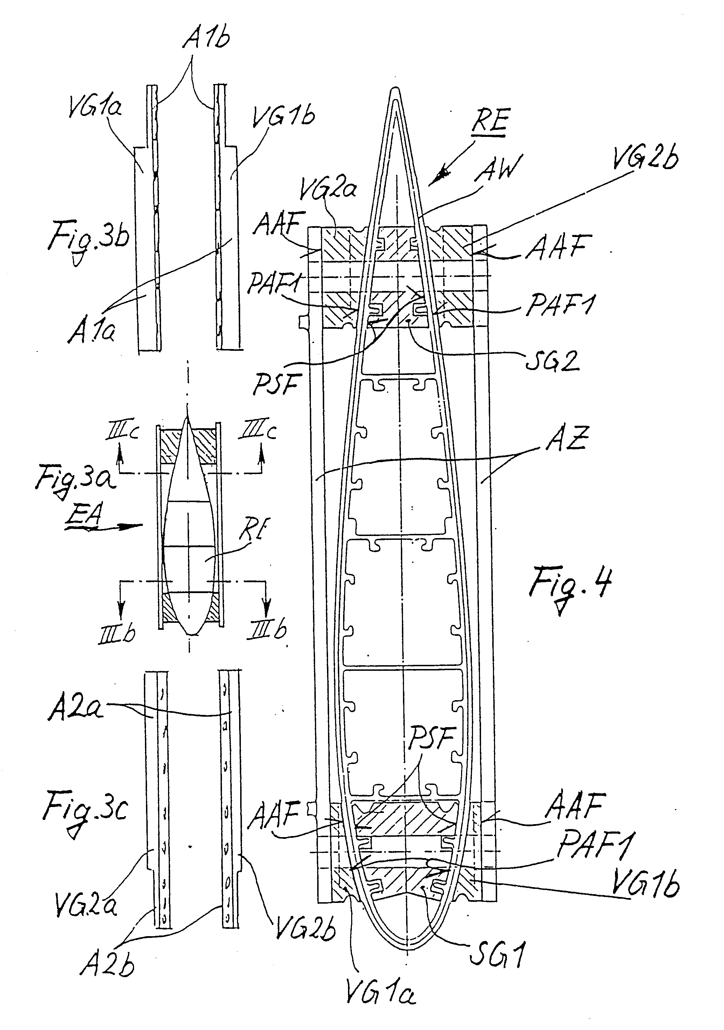

Der in Fig.2 gezeigte Endanschluss EA umfasst zwei plattenförmige, mit der Zentralwelle ZW verschweisste und gegen diese durch eine Querstrebe QS abgestützte Anschlusselemente AZ, zwischen denen der Rotorblatt-Endabschnitt RE eingesetzt ist. Die Kraftübertragung zwischen Rotorblatt und Anschlusselementen erfolgt durch Verbindungsglieder VG1a und VG2a an der Oberseite sowie durch Verbindungsglieder VG1b und VG2b an der Unterseite des Profilquerschnitts des Endabschnitts RE, wie dies deutlicher der Uebersicht gemäss Figuren 3a bis 3c und der ausführlicheren Querschnittsdarstellung des Endanschlusses EA in Fig.4 zu entnehmen ist. Die zwischen der Aussenwandung AW des Rotorblatt-Hohlkörpers und den Zentralwellen-Anschlusselementen AZ übertrragenen Kräfte resultieren hauptsächlich aus den beträchtlichen Biege-und Torsionsmomenten, die an dem unter Winddruck stehenden Rotor erzeugt werden, und stellen daher im wesentlichen Schubkräfte dar, die in erster Linie durch Querbolzen QB übertragen werden. Letztere durchgreifen Querbohrungen QR, die sich durch äussere Anschlussabschnitte A1b und A2b der bereits erwähnten Verbindungsglieder sowie durch die Aussenwandung AW des Rotorblatt-Hohlprofils und ferner durch in letzteres eingesetzte, leistenförmige Stützglieder SG1 und SG2, welche die Aussenwandung AW gegen die Druckkräfte der durch die Querbolzen gebildeten Verschraubung abstützen.

Die Verbindungs-und Stützglieder sind dazu mit dem Profil der Aussenwandung formangepassten Profilauflageflächen PAF1 bzw. mit Profilstützflächen PSF versehen.

Soweit bisher beschrieben, erfolgt die Kraftübertragung vom Rotorblatt bis in die äusseren Anschlussabschnitte A1b und A2b der Verbindungsglieder. Innere Anschlussabschnitte A1a und A1b dieser Verbindungsglieder stehen nun durch weitere Querbolzen QB1, die ebenfalls in entsprechende Querbohrungen QR eingesetzt sind, mit den Anschlusselementen AZ in - schubkraftübertragender Verbindung, womit die Rotorkräfte zur Zentralwelle gelangen. Die Stützglieder SG1 und SG2 sind wegen der durch die Querbolzen QB1 gebildeten Verschraubung mit dem Rotorblatt-Endabschnitt RE in den inneren Bereich des Innenraumes zwischen den Anschlusselementen AZ geführt. In diesem Bereich wird nur ein geringer Teil der Rotorblattkräfte übertragen, da die Längsspannungen in der Aussenwandung wegen der geringen Wandstärke und der entsprechend grossen Längsdehnung bereits weitgehend abgebaut sind. Der genannte innere Bereich des Endanschlusses EA dient daher hasuptsächlich der Kraftübertragung zwischen den Verbindungsgliedern und den Anschlussgliedern der Zentralwelle. Immerhin verbleibt noch eine gewisse restliche Kraftübertragung auch in diesem Bereich, und zwar auch durch den Reibungsschluss infolge des Verschraubungsdruckes. Für dessen gleichmässige Einleitung bzw. Uebertragung sind die Verbindungsglieder an ihren Aussenseiten mit ebenen, zu den Bolzen-bzw. Bohrungsachsen rechtwinklig angeordneten Auflageflächen AAf versehen.

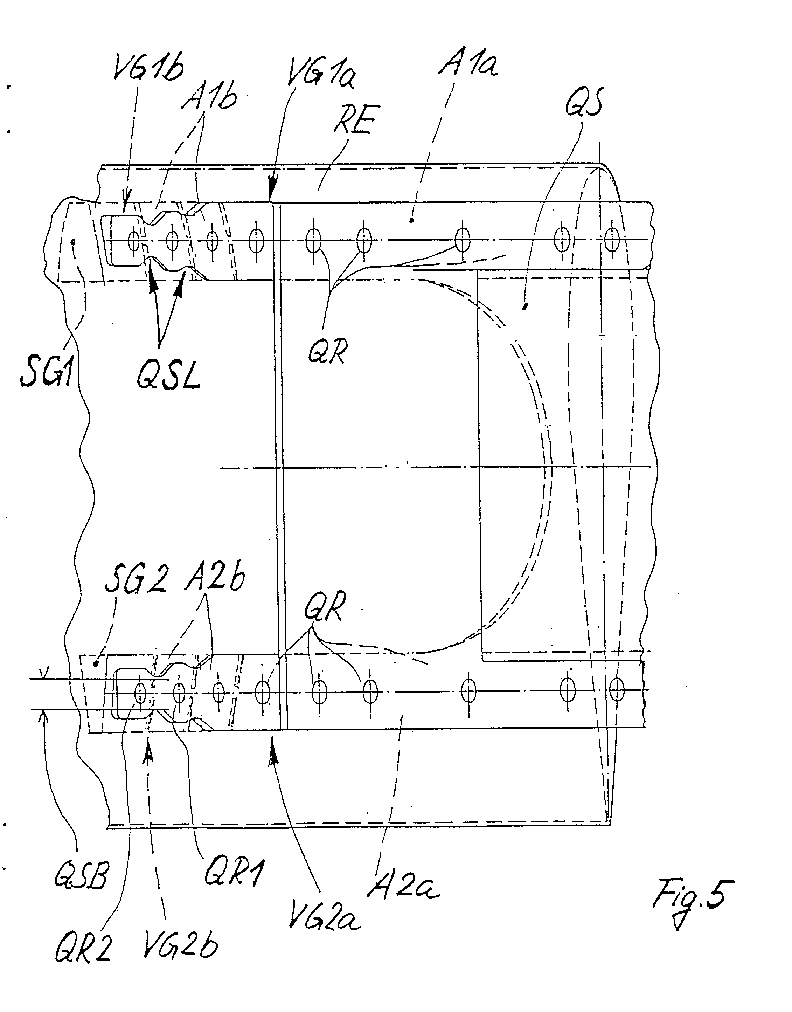

Wesentlich für die Festigkeit des Anschlusses ist die Vermeidung von Spannungsüberhöhungen in dem hauptsächlichen Bereich der Kraftübertragung zwischen den starkwandigen Verbindungsgggliedern und der dünnen Aussenwandung des Hohlprofils. Dazu wird die Steifheit der äusseren Anschlussabschnitte A1b und A2b gegenüber Zug-bzw. Druckkräften in ihrer Längsrichtung durch eine gegenüber den inneren Anschlussabschnitten A1a und A2a verminderte Querschnittshöhe, wie sie aus Fig.3b und Fig.3c ersichtlich ist, herabgesetzt. grundsätzlich kann eine entsprechende Verminderung der tragenden Querschnittsfläche auch in mehreren Stufen oder gegebenenfalls stetig gestaltet werden. Da ohne weiteres verständlich, sind diese Varianten nicht besonders dargestellt. Ebenso kann mit Vorteil eine stufenförmige oder stetige Verminderung der Querschnittsbreite QSB vorgenommen werden, wie diese in Fig.5 angedeutet ist. Dabei ergibt sich insbesondere im Hinblick auf eine annähernd stetige Veränderung des tragenden Querschnitts über der Längenausdehnung der Anschlussabschnitte eine abgerundete Einschnürung der Querschnittsbreite im Bereich zwischen den in Blattlängsrichtung aufeinanderfolgenden Bohrungen QR. Ferner hat es sich als wesentlich erwiesen, auch den Stützgliedern SG1 und SG2 im Bereich der äusseren Anschlussabschnitte eine grössere Nachgiebigkeit in Blattlängsrichtung zu verleihen, was im Beispiel gemäss Fig.5 durch Querschlitze QSL erreicht wird. Die Eingriffstiefe dieser Querschlitze in den Querschnitt der Stützglieder bzw. der verbleibende Restquerschnitt und die Schlitzbreite richten sich nach dem in Einzelfall erwünschten Grad der Steifheitsverminderung.

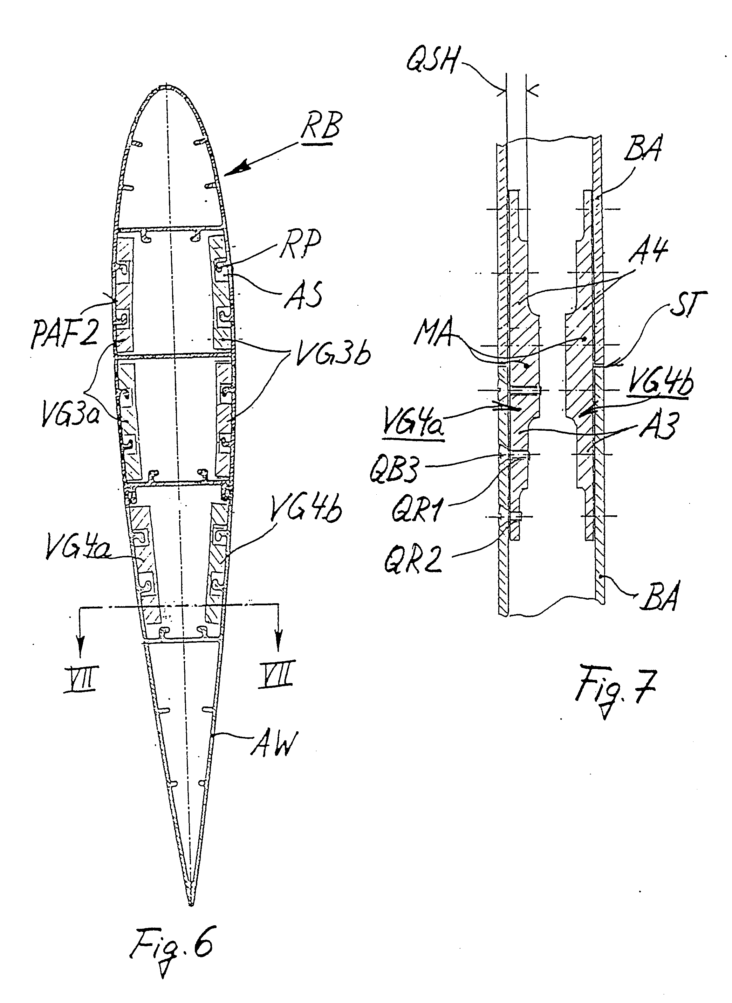

Für die in Figuren 6 und 7 dargestellte Stossverbindung zweier Rotorblattabschnitte BA und die auch hier stattfindende Kraftübertragung zwischen starkwandigen, sich in Blattlängsrichtung erstreckenden Verbindungsgliedern VG3a, VG3b, VG4a, VG4b und der dünnen Profilaussenwandung AW gelten die gleichen Gesichtspunkte. Wie aus Fig.7 ersichtlich, vermindert sich die tragende Querschnittshöhe QSH von einem starkwandigen Mittelabschnitt MA aus nach beiden Seiten innerhalb von Anschlussabschnitten A3 und A4 stufenförmig. Zwischen je zwei in Blattlängsrichtung aufeinanderfolgenden Querbohrungen QR1, Qr2 mit ihren schubkraftübertragenden Querbolzen QB3 kann mit Vorteil eine Einschnürung der Querschnittsbreite in entsprechender Weise wie bei den Anschlussabschnitten A1b und A2b gemäss Fig.5 vorgenommen werden.

Weiterhin sind an der Innenfläche der Aussenwandung AW sich in Blattlängsrichtung erstreckende Versteifungsrippen RP angeformt. In äusseren Profilanlageflächen PAF2 der Verbindungsglieder sind Ausnehmungen AS für den Durchtritt dieser Rippen eingeformt. Diese Ausnehmungen können ebenfalls für eine gewünschte Beeinflussung der Verformungssteifheit der Verbindungsglieder im Bereich der Kraftübertragung zur Profilaussenwandung herangezogen werden.

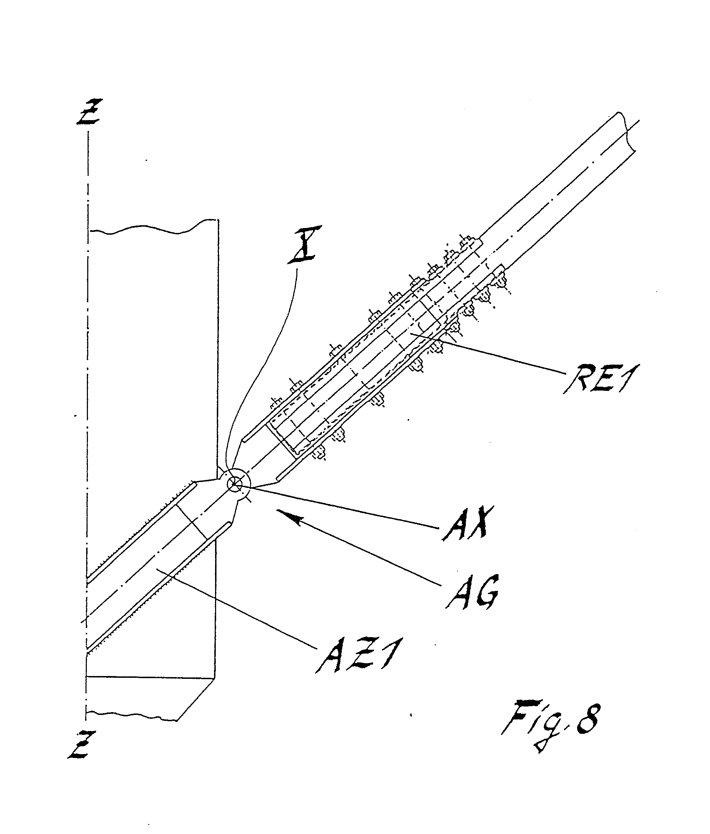

Fig.8 zeigt eine Anschlusskonstruktion zwischen einem wellenseitigen Anschlusselement AZ1 und einem Rotorblatt-Endabschnitt RE1 mit einem Achsgelenk AG, das eine im wesentlichen horizontale, quer zur Zentralwellenachse Z-Z angeordnete Schwenkachse X bildet. Diese Anordnung verhindert das Entstehen von Biegemomenten im Anschlussbereich infolge von Kräften, die parallel zu der durch die Zentralwellenachse Z-Z und das Rotorblatt gebildeten Ebene auf den Körper des Rotorblattes einwirken. Die entsprechenden Verformungen des Rotorkörpers können sich daher unbehindert durch eine starre Verbindung mit dem Zentralwellenkörper ausbilden. Damit werden überhöhte Materialspannungen im Anschlussbereich vermieden. Die notwendige Übertragung des Antriebsdrehmomentes zwischen Rotorblatt und Zentralwelle erfolgt über einen horizontal angeordneten Achskörper ZX, den mit dem Anschlusselement AZ1 bzw. mit dem Rotorblatt-Endabschnitt RE1 fest verbundene Lagerösen umgreifen.

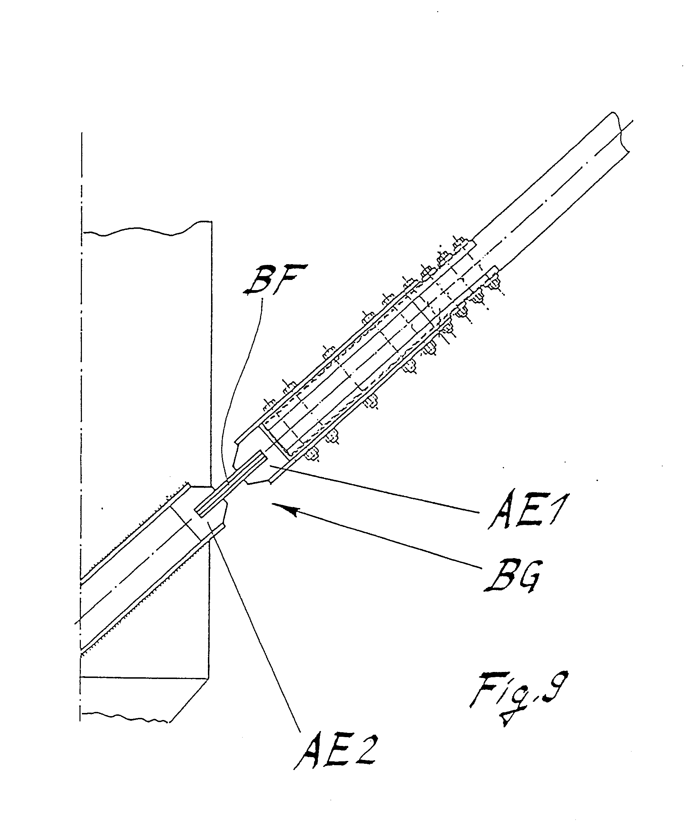

Fig.9 zeigt eine abgewandelte Anschlusskonstruktion mit einem Biegegelenk BG, das im wesentlichen eine der vorsangehenden Ausführung entsprechende Funktion erfüllt. Als in Vertikalrichtung biegeelastisch verformbare Gelenkelemente sind hier übereinandergeschichtete Blatfedern BF vorgesehen, die in beiderseitigen Anschlusselementen AE1 und AE2 in Horizontalrichtung unverschiebbar verankert sind und somit das Antriebsmoment übertragen können. Diese Verankerung kann in an sich üblicher und daher nicht näher dargestellter Weise mittels geeigneter Formoder Stoffschlussverbindungen hergestellt werden.

## Ansprüche

1. Rotor für eine Windturbine, der eine vertikale Zentralwelle und eine Mehrzahl von sich im wesentlichen in Radialebenen bogenartig vom oberen zum unteren Endbereich der Zentralwelle erstreckenden Rotorblättern aufweist, die durch Endanschlüsse mit je einem starkwandigen Anschlusselement der Zentralwelle verbunden sind, wobei die Rotorblätter als Hohlprofilkörper mit einer Aussenwandung vergleichsweise geringer Wandstärke und mit einem tragflügelartigen Profilquerschnitt ausgebildet sind, dadurch gekennzeichnet, dass mindestens einer der Endanschlüsse (EA) wenigstens ein starkwandiges, sich in Längsrichtung des Rotorblattes (RB) erstreckendes, einerseits dem Anschlusselement (AZ) der Zentralwelle (ZW) und andererseits dem benachbarten Endabschnitt des Rotorblattes zugeordnetes Verbindungsglied (VG1a, VG1b; VG2a, VG2b) aufweist, das einen sich längs des Anschlusselementes (AZ) der Zentralwelle erstreckenden ersten Anschlussabschnitt (A1a, A2a) und einen sich längs der Aussenwandung (AW) des Rotorblatt-Endabschnitts (RE) erstreckenden zweiten Anschlussabschnitt (A1b, A2b) umfasst, der wenigsten auf einem Teil seiner Erstreckung in Blattlängsrichtung eine bezüglich des ersten Anschlussabschnitts geringere Steifheit gegen übertragene Zug-bzw. Druckkräfte aufweist.

2. Windturbinenrotor nach Anspruch 1, dadurch gekennzeichnet, dass wenigstens ein Verbindungsglied (VG1a, VG1b; VG2a, VG2b) an einer äusseren Längsseite des Tragflügel-Profilquerschnitts des betreffenden Rotorblattes angeordnet ist und eine der Profilaussenkontur desselben wenigstens abschnittsweise angepasste Profilauflagefläche (PAF1) aufweist.

3. Windturbinenrotor nach Anspruch 2, dadurch gekennzeichnet, dass für die Schubkraftübertragung vom Anschlusselement (AZ) der Zentralwelle (ZW) über das Verbindungsglied (VG1a, VG1b; VG2a, VG2b) zur Aussenwandung des Rotorblatt-Endabschnitts (RE) sowie zur Zug- bzw. Druckkrafteinleitung in diese Aussenwandung eine Verschraubung mit einer Mehrzahl von Querbolzen (QB1) vorgesehen ist, welche das Anschlusselement (AZ), das Verbindungsglied (VG1a, VG1b; VG2a, VG2b) und die Aussenwandung des Rotorblattes durchgreifen, und dass das Verbindungsglied (VG1, VG2) eine wenigstens abschnittsweise eben ausgebildete und rechtwinklig zur Achse der Querbolzen (QB1) angeordnete, äussere Auflagefläche (AAF) aufweist.

4. Windturbinenrotor nach Anspruch 2 oder 3, dadurch gekennzeichnet, dass das Anschlusselement (AZ) der Zentralwelle (ZW) den Rotorblatt-Endabschnitt (RE) überlappend sowie an der Aussenfläche (AAF) des Verbindungsgliedes (VG1, VG2) aufliegend angeordnet ist, dass der erste Anschlussabschnitt (A1a, A2a) des Verbindungsgliedes (VG1a, VG1b; VG2a, VG2b) wenigstens teilweise zwischen der Rotorblatt-Aussenwandung (AW) und der Innenfläche des Anschlusselementes (AZ) der Zentralwelle (ZW) angeordnet ist und dass sich der zweite Anschlussabschnitt (A1b, A2b) des Verbindungsgliedes (VG1a, VG1b; VG2a, VG2b) in Längsrichtung des Rotorblattes und von der Zentralwelle nach aussen über dessen Anschlusselement (AZ) hinaus erstreckt.

5. Windturbinenrotor nach Anspruch 4, dadurch gekennzeichnet, dass an den einander gegenüberliegenden Längsseiten des Tragflügel-Profilquerschnitts des Rotorblatt-Endabschnitts (RE) je mindestens ein Verbindungsglied (VG1a, VG1b; VG2a, VG2b) und an der Aussenfläche (AAF) desselben aufliegend jeweils mindestens ein Zentralwellen-Anschlusselement (AZ) angeordnet ist.

6. Windturbinenrotor nach einem der vorangehenden Ansprüche, dadurch gekennzeichnet, dass im Profilinnenraum des Rotorblatt-Endabschnitts jeweils im Bereich wenigstens eines aussenliegenden Verbindungsgliedes (VG1a, VG1b; VG2a, VG2b) mindestens eine sich in Blattlängsrichtung erstreckendes Stützglied (SG1, SG2) angeordnet ist, das zueinander entgegengesetzt orientierte und dem Innenprofil des Rotorblattes formangepasste Profilstützflächen (PSF) aufweist.

7. Rotor für eine Windturbine, der eine vertikale Zentralwelle und eine Mehrzahl von sich im wesentlichen in Radialebenen bogenartig vom oberen zum unteren Endbereich der Zentralwelle erstreckenden Rotorblättern aufweist, die durch biege-und torsionssteife Endanschlüsse mit je einem Anschlusselement der Zentralwelle verbunden sind, wobei die Rotorblätter als Hohlprofilkörper mit einer Aussenwandung vergleichsweise geringer Wandstärke sowie mit einem tragflügelartigen Profilquerschnitt ausgebildet und aus mindestens zwei durch biege-und torsionssteife Stossanschlüsse miteinander verbundenen Blattabschnitten zusammengesetzt sind, insbesondere nach einem der vorangehenden Ansprüche, dadurch gekennzeichnet, dass der Stossanschluss (SA) mindestens ein sich über die Stossstelle (ST) der Blattabschnitte (BA) hinweg erstreckendes, im Profilinnenraum derselben angeordnetes Verbindungsglied (VG3a, VG3b; VG4a, VG4b) aufweist, das einen im Bereich der Stossstelle (ST) angeordneten Mittelabschnitt (MA) und zwei je einem der zusammenstossenden Blattabschnitte zugeordnete und mit deren Aussenwandung (AW) schubfest verbundene Anschlussabschnitte (A3, A4) umfasst, und dass die Anschlussabschnitte (A3, A4) wenigsten auf einem Teil ihrer Erstreckung in Blattlängsrichtung eine bezüglich des Mittelabschnitts (MA) geringere Steifheit gegen die übertragenen Zug-bzw. Druckkräfte aufweisen.

8. Windturbinenrotor nach einem der vorangehenden Ansprüche, dadurch gekennzeichnet, dass die in Normalrichtung zum jeweils benachbarten Abschnitt der Rotorblatt-Profilkontur gemessene, tragende Querschnittshöhe (QSH) der sich über eine Blattendkante (BK) erstreckenden Verbindungsglieder (VG1a, VG1b; VG2a, VG2b; VG3a, VGG3b, VG4a, VG4b) von dieser Endkante aus in Battlängsrichtung wenigstens abschnittsweise stetig oder stufenförmig abnehmend bemessen ist.

9. Windturbinenrotor nach einem der vorangehenden Ansprüche, dadurch gekennzeichnet, dass mindestens ein Verbindungsglied (VG1a, VG1b; VG2a, VG2b; VG3a, VGG3b, VG4a, VG4b) und/oder ein Stützglied (SG1, SG2) eine Mehrzahl von Querbohrungen (QR) für den Durchgriff von - schubspannungsübertragenden Elementen (QB2, QB3) für die Zug-bzw. Druckspannungseinleitung in eine Rotorblatt-Aussenwandung (AW) aufweist und dass die rechtwinklig zur den Querbohrungsachse sowie zur Verbindungslinie zweier in Blattlängsrichtung aufeinanderfolgender Querbohrungen (QR1, QR2) gemessene, tragende Querschnittsbreite (QSB) im Bereich zwischen diesen Querbohrung in Bezug auf die benachbarten Bereiche vermindert ist.

10. Windturbinenrotor nach einem der vorangehenden Ansprüche, dadurch gekennzeichnet, dass in der Innenfläche der Rotorblatt-Aussenwandung (AW) sich im wesentlichen in Blattlängsrichtung erstreckende Versteifungsrippen (RP) angeformt sind, dass im Profilinnenraum wenigstens ein Verbindungs-oder Stützglied (VG3a, VG3b; VG4a, VG4b; SG1, SG2) mit der Profilinnenfläche formangepasster Profilanlagefläche (PAF2) bzw. Profilstütztfläche (PSF) angeordnet ist und dass mindestens eine Profilanlagefläche wenigstens eine dem Rippenquerschnitt angepasste, insbesondere mit dieser in Formschlussverbindung stehende Ausnehmung (AS) aufweist.

11. Rotor für eine Windturbine, der eine vertikale Zentralwelle und eine Mehrzahl von sich im wesentlichen in Radialebenen bogenartig vom oberen zum unteren Endbereich der Zentralwelle erstreckenden Rotorblättern aufweist, die durch Endanschlüsse mit je einem starkwandigen Anschlusselement der Zentralwelle verbunden sind, wobei die Rotorblätter als Hohlprofilkörper mit einer Aussenwandung vergleichsweise geringer Wandstärke und mit einem tragflügelartigen Profilquerschnitt ausgebildet sind, insbesondere nach einem der vorangehenden Ansprüche, dadurch gekennzeichnet, dass wenigstens einer der Endabschnitte (RE1) jeweils eines Rotorblattes durch einen in Richtung parallel zur Achse (Z-Z) der Zentralwelle gelenkig beweglichen oder elastisch biegeweich verformbaren Anschluss (AG, BG) mit der Zentralwelle verbunden ist.

Fig. 2

Fig. 1

Fig.3b

Fig.3a

Fig.3c

Fig.4

0 277 607

Fig.5

Fig. 6

Fig. 7

Fig. 8

Fig.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 525 911 (SISSON)<br>* Spalte 2, Zeile 1 - Spalte 3, Zeile 8 * | 1-3,6 | F 03 D 3/06 |
| | --- | | |
| A | FR-A-2 393 959 (SSP AGRICULTURAL EQUIPMENT)<br>* Seite 5, Zeile 20 - Seite 8, Zeile 8 * | 1-5,8,9 | |
| | --- | | |
| A | US-A-4 281 965 (STJERNHOLM)<br>* Spalte 2, Zeilen 16-24 * | 11 | |
| | ----- | | |

RECHERCHIERTE
SACHGEBIETE (Int. Cl.4)

F 03 D

Der vorliegende Recherchenbericht wurde für alle Patentansprüche erstellt

| Recherchenort | Abschlußdatum der Recherche | Prüfer |
|---|---|---|
| DEN HAAG | 13-04-1988 | DE WINTER P.E.F. |